# EUROPEAN PATENT APPLICATION

(11) **EP 4 403 517 A1**
(43) Date of publication of application: **24.07.2024**
(21) Application number: 22870400.3
(22) Date of filing: 07.09.2022
(51) Int. Cl.: C01B 32/55, B01J 2/00, F25J 1/00

(54) **METHOD, DEVICE AND SYSTEM FOR PRODUCING GRANULATED CARBON DIOXIDE**

(30) Priority: 14.09.2021 RU 2021126995
(71) Applicant: Irbis Technology LLC, Moscow, 143026 (RU)
(72) Inventor: GIMADEEV, Artur Iliasovich, Kazan, 420102 (RU)
(74) Representative: Meroni, Francesca
(86) International application number: PCT/RU2022/050280
(87) International publication number: WO 2023/043337

(57) **Abstract**

The present invention relates to the field of production of granulated solid carbon dioxide (CO2), in particular, to a method for production of granulated solid carbon dioxide, comprising the formation of solid CO2, compression of solid CO2 to provide a conversion of at least a portion of solid CO2 to a state of highly viscous fluid CO2 and stopping the compression to produce granulated solid CO2. Also provided is granulated CO2 produced by this method, and an apparatus for producing granulated CO2.

## Description

### FIELD OF TECHNOLOGY, TO WHICH THE INVENTION RELATES

The present invention relates to the field of production of granulated solid carbon dioxide (CO2), in particular, to a method, apparatus and system for producing granulated solid carbon dioxide. The granulated solid CO2 produced by the present application may be formed into structures such as granules, briquettes suitable for packaging and further processing, or for end use. Granulated solid CO2 has a wide range of different uses, including use for cleaning purposes, such as blast cleaning of the surfaces of parts of various industrial equipment from operational and process surface contaminants, and for processes of cooling various industrial and non-industrial objects and products.

### PRIOR ART

To produce granulated solid CO2, solid CO2 is compressed to compact its structure and obtain granules of the required shape. The granulated solid CO2, in contrast to solid carbon dioxide particles, also known as carbon dioxide "snow" provides more efficient cleaning of object surfaces of objects due to a higher density and hardness, allows dosing solid carbon dioxide, and contributes to an increase in the storage time of solid carbon dioxide before its use in various applications.

The patent US6189336 (IPC C01B32/55, F25J1/00, published February 20, 2001 (20.02.2001)) discloses a device for producing solid CO2, comprising two chambers for producing solid CO2 in the form of "snow", a filter for retaining solid CO2 in a flow of gaseous CO2, two pistons for moving solid CO2 and a compression chamber in which solid CO2 is compressed into the required shape by means of a piston pressing block. The disadvantage of this device is its complexity and bulkiness, due to the need to use a pair of solid CO2 formation chambers with a pair of pistons, as well as a compressing chamber with a piston pressing block. Also, the use of multiple actuated pistons, as well as an integrated hydraulic system for actuating the piston pressing block leads to the generation and penetration of heat into the chambers of the device, which has an undesirable effect on the conversion of liquid CO2 to solid CO2 and the quality of the resulting granulated CO2, such as granulating density.

The patent RU2741594 C1 (IPC C01B 32/55, B01J 2/00, B29C 43/00, published January 27, 2021 (27.01.2021)) discloses a device and method for producing granulated CO2, wherein the device comprises a case for solid CO2, a housing for liquid CO2, a sleeve for gaseous CO2 removed from the case, and a pressing member driven by the force of gaseous CO2 removed from the sleeve. The disadvantage of this device and method is the complexity of the design of the device and the steps of the method due to the need to use gaseous CO2 formed in the process of producing solid CO2 to actuate the pressing member. So, for example, RU2741594 C1 requires strict adherence to the conditions regarding compaction and temperatures in the actuator that drives the pressing member using the energy of gaseous CO2 formed during the production of solid CO2. Also, the density of the resulting CO2 granules is insufficient for a number of applications, for example, those associated with cleaning equipment and products. Additionally, due to the complexity of the device design, its performance and reliability are insufficient.

It is known from the prior art that to produce metal shape/pipes, the method of extruding hot metal through a matrix of a certain shape is used. Albeit metal is a solid, when heated sufficiently it becomes relatively soft and, when extruded, the metal begins to behave like a highly viscous liquid. The same effect can be observed when forging heated metal, when hammer blows give the metal the required shape. This comparison can also be applied to the process of producing dry ice granules, which will be disclosed in more detail below.

### SUMMARY OF THE INVENTION

The technical problem resolved by the present invention is to implement a method for producing granulated solid CO2 with proper density, having high performance and reliability, as well as apparatus and systems for implementing the method.

Another technical result of the present invention is to provide a method and apparatus for producing granulated solid CO2 with proper density, having high performance and reliability.

It is also a technical result of the present invention to increase the overall efficiency of the process for producing granulated solid CO2.

It is a further technical result of the present invention to increase the efficiency of heat transfer from the case wall of the granulated CO2 production apparatus to solid CO2.

It is a further technical result of the present invention to provide the quality control option of the resulting granulated solid CO2 and the process of its production.

Another technical result of the present invention is to provide an apparatus for producing granulated solid CO2 configured to reduce wear of the components of the apparatus, in particular, to reduce wear of the pressing member of the apparatus.

It is a further technical result of the present invention to provide an apparatus for producing granulated solid CO2 with improved thermal insulation characteristics of the apparatus components.

Said technical problem is resolved and said technical results are accomplished by the method and apparatus for producing granulated solid CO2 according to the present invention.

The present invention relates to a method for producing granulated CO2, comprising:
a) formation of solid CO2 inside the case of the granulated CO2 production apparatus,
b) compressing solid CO2 inside the case of the apparatus to provide a conversion of at least a portion of the formed solid CO2 to a state of essentially high-viscosity liquid CO2, and the said portion of the solid CO2, which has undergone a conversion to a state of essentially high-viscosity liquid CO2 is located adjacent to the inner surface of the case wall,
c) stopping the compressing to provide a conversion of CO2, which is in the state of essentially high-viscosity liquid CO2, into solid CO2 to produce granulated CO2.

According to one embodiment of the present invention, a method is provided further comprising step d) applying force to the granulated CO2 to ensure that the granulated CO2 exits the apparatus case, wherein the case has a chamber for forming solid CO2, wherein steps a)-c) are carried out in the sold CO2 chamber.

According to one embodiment of the present invention, a method is provided, wherein granulated CO2 production apparatus comprises a housing defining a liquid CO2 chamber configured to receive liquid CO2, wherein the liquid CO2 chamber envelopes the case, wherein liquid CO2 is cyclically and/or continuously fed to the liquid CO2 chamber, wherein the supply of liquid CO2 to the liquid CO2 chamber is controlled such that the liquid CO2 is in contact with areas of the housing wall adjacent to which the high-viscosity fluid CO2 is formed.

According to one embodiment of the present invention, a method is provided, wherein the case has an outer wall surface, wherein a groove is provided on the outer wall surface, running in a spiral along the outer wall surface and configured to allow liquid CO2 to flow therethrough, wherein liquid CO2 is supplied into the apparatus such that liquid CO2 flows along said groove.

According to one embodiment of the present invention, a method is provided, wherein the case contains a plurality of filter assemblies with a plurality of holes in the case, wherein it provides inflow of CO2, which is in the state of essentially high-viscosity fluid CO2 into said plurality of holes to form protrusion-shaped shoots.

According to one embodiment of the present invention, a method is provided, wherein the filter assemblies comprise a plurality of filtering elements, wherein a plurality of holes in the case are configured to accommodate a plurality of filtering elements, wherein each filtering element has a filtering element housing and a reinforcing element in-built in the filtering element housing.

According to one embodiment of the present invention, a method is provided, wherein the case contains a plurality of holes, wherein it provides inflow of CO2, which is in the state of essentially high-viscosity fluid CO2 into said plurality of holes to form protrusion-shaped shoots, wherein the method further comprises step d) applying force to the granulated CO2 to ensure the release of the granulated CO2 from the apparatus case, wherein in step d) provides cutting of the protrusion-shaped shoots, wherein the granulated CO2 has visible shoot cutting areas on its surface.

According to one embodiment of the present invention, a method is provided, wherein a plurality of holes in the case are configured to accommodate a plurality of filtering elements, wherein each filtering element has a filtering element housing and a reinforcing element in-built in the filtering element housing.

According to one embodiment of the present invention, a method is provided, wherein in step b) all solid CO2 located in the case of the granulated CO2 production apparatus is converted into a state of essentially high-viscosity fluid CO2. Wherein, solid CO2, undergoing a conversion to a state of essentially high-viscosity fluid CO2, is in contact with/adjacent to the inner wall of the case, the pressing member and the release valve.

The present invention also relates to granulated CO2 for cleaning surfaces and/or for cooling products obtained by the above method, comprising visible areas of cutting off shoots and/or visible areas of appearance of shoots on its surface.

Also, the present invention relates to an apparatus for producing granulated carbon dioxide, comprising:
- a case having a chamber for solid CO2, configured to form solid CO2 therein,
- a pressing member configured to compress solid CO2 in the chamber for solid CO2 to provide the conversion of at least a portion of the solid CO2 into the state of essentially high-viscosity liquid CO2, wherein said portion of the solid CO2, which has undergone a conversion into the state of essentially high-viscosity liquid CO2, is located adjacent the inner surface of the case wall,
wherein the apparatus is configured to provide contact of liquid CO2 with areas of the case wall adjacent to which highly viscous fluid CO2 is formed.

According to one embodiment of the present invention, an apparatus is provided, further comprising:
- a housing defining a liquid CO2 chamber configured to cyclically and/or continuously receive liquid CO2, wherein the liquid CO2 chamber envelopes the case, and
- a power block to provide the movement of liquid CO2 in the liquid CO2 chamber of the case configured to cyclically and/or continuously supply liquid CO2 into the liquid CO2 chamber of the case,
wherein the power block for providing movement of liquid CO2 is configured to supply liquid CO2 such that the liquid CO2 is in contact with areas of the case wall adjacent to which high-viscosity fluid CO2 is formed, wherein the case wall areas are areas of the outer surface of the case wall.

According to one embodiment of the present invention, an apparatus is provided, wherein the power block for providing movement of liquid CO2 is a pump, or the power block for providing movement of liquid CO2 configured to provide cyclic supply of liquid CO2, is a valve for injection of liquid CO2 into the solid CO2 chamber of the case.

According to one embodiment of the present invention, an apparatus is provided, wherein the case comprises a plurality of filter assemblies with a plurality of holes in the case configured to provide the inflow of CO2, which is in the state of essentially high-viscosity fluid CO2, into said plurality of holes to form protrusion-shaped shoots, wherein the pressing member is configured to cut off the protrusion-shaped shoots providing visible areas of cutting off shoots on the surface of granulated CO2.

According to one embodiment of the present invention, an apparatus is provided, wherein each filter assembly comprises a grid element with holes configured integral with the case of the granulated CO2 production apparatus, and wherein the grid element is configured to absorb the force applied by the CO2, which is in a state of essentially high-viscosity fluid CO2, in the direction from the center of the case of the granulated CO2 production apparatus to the inner surface of the wall of the case of the granulated CO2 production apparatus.

According to one embodiment of the present invention, an apparatus is provided, wherein the filter assembly comprises a filtering element, wherein the end of the filtering element directed to the center of the case of the granulated CO2 production apparatus is configured to repeat the geometry of the inner surface of the solid CO2 chamber wall to provide unhindered movement of the pressing member in the solid CO2 chamber, wherein the grid element with holes and/or said end of the filtering element is configured to provide the inflow of solid CO2, which is in the state of essentially high-viscosity fluid CO2, therein, wherein the case of at least one filtering element is in thermal contact with liquid CO2.

According to one embodiment of the present invention, an apparatus is provided, wherein the case comprises a plurality of holes in the case configured to provide the inflow of CO2, which is in the state of essentially high-viscosity fluid CO2, into said plurality of holes to form protrusion-shaped shoots.

According to one embodiment of the present invention, an apparatus is provided, wherein the pressing member is configured to cut off the protrusion-shaped shoots providing visible areas of cutting off shoots on the surface of granulated CO2.

According to one embodiment of the present invention, an apparatus is provided, wherein a plurality of holes in the case are configured to accommodate a plurality of filtering elements, wherein each filtering element has a filtering element housing and a reinforcing element in-built in the filtering element housing, wherein the plurality of holes comprise a plurality of actuators (power blocks) configured integral with the case of the granulated CO2 production apparatus, wherein power block is configured in the form of a circle, in the center of which there is a grid element. The power block can also be configured in the form of a parallelogram, comprising a rectangle, square, diamond, in which a grid element is defined. The grid element may have a circular/rounded shape or a parallelogram shape, including rectangle, square, diamond. The power block can be configured to absorb the force applied by the CO2, which is in a state of essentially high-viscosity fluid CO2, in the direction from the center of the case of the granulated CO2 production apparatus to the inner surface of the wall of the case of the granulated CO2 production apparatus.

According to one embodiment of the present invention, an apparatus is provided, wherein the case has an outer wall surface, wherein a groove is provided on the outer wall surface, running in a spiral along the outer wall surface and configured to allow liquid CO2 to flow therethrough.

According to one embodiment of the present invention, an apparatus is provided, wherein the power block to provide the movement of liquid CO2 is configured to supply liquid CO2 such that liquid CO2 flows along said groove.

According to one embodiment of the present invention, an apparatus is provided, wherein the case has an outer wall surface, wherein a groove is provided on the outer wall surface, running in a spiral along the outer wall surface and configured to allow liquid CO2 to flow therethrough, and wherein the granulated CO2 production apparatus is provided with at least one bushing located on top of the outer surface of the case wall.

According to one embodiment of the present invention, an apparatus is provided, wherein the mating of the case and the bushing provides the formation of a groove running in a spiral along the outer surface of the case wall and configured to flow liquid CO2 therethrough, wherein the power block to provide the movement of liquid CO2 is configured to supply liquid CO2 such that liquid CO2 flows along said groove.

According to one embodiment of the present invention, an apparatus is provided, wherein at least one said bushing is located on top of the groove on the outer surface of the case wall and is configured to limit the flow of liquid CO2 flowing along the groove of the case, wherein the housing has an inner wall surface, wherein at least one said bushing is configured to provide thermal insulation of the flow of liquid CO2, flowing along the groove of the case, relative to the inner surface of the housing wall.

According to one embodiment of the present invention, an apparatus is provided, wherein the pressing member is configured to be driven by the force of a fluid medium, which is a compressed gas or a pressurized liquid, preferably compressed air.

Also, the present invention relates to an apparatus for producing granulated carbon dioxide, comprising:
- a case having a chamber for solid CO2, configured to form solid CO2 therein,
- a pressing member configured to compress solid CO2 in the chamber for solid CO2 to provide the conversion of at least a portion of the solid CO2 into the state of essentially high-viscosity liquid CO2, wherein said portion of the solid CO2, which has undergone a conversion into the state of essentially high-viscosity liquid CO2, is located adjacent the inner surface of the case wall,
- a housing defining a liquid CO2 chamber configured to cyclically and/or continuously receive liquid CO2, wherein the liquid CO2 chamber envelopes the case, and
wherein the case has an outer wall surface, wherein a groove is provided on the outer wall surface, running in a spiral along the outer wall surface and configured to allow liquid CO2 to flow therethrough, and wherein the granulated CO2 production apparatus is provided with at least one bushing located on top of the outer surface of the case wall.

The present invention also relates to a granulated CO2 production system comprising:
- at least one granulated CO2 production apparatus as described above, and
- a pressing member actuator communicating with the granulated CO2 production apparatus and configured to supply a fluid medium to the pressing member.

According to one embodiment of the present invention, a system is provided wherein the pressing member actuator is a compressor.

According to one embodiment of the present invention, a system is provided wherein the pressing member actuator is configured to communicate with the granulated CO2 production apparatus through a fluid medium.

According to one embodiment of the present invention, a system is provided wherein at least one granulated CO2 production apparatus and the pressing member actuator are spatially separated.

The following description discloses and describes in more detail embodiments of the provided invention. It will be appreciated that the invention is capable of other embodiments, and certain details thereof are capable of modification in various obvious respects without departing from the invention as set forth and described in the following claims. Accordingly, the drawings and description are to be considered illustrative and not restrictive in nature.

### BRIEF DESCRIPTION OF THE DRAWINGS

Fig. 1 illustrates a partial cross-sectional view of the granulated solid CO2 producing apparatus according to the present invention.
Fig. 2 illustrates another partial cross-sectional view of the granulated solid CO2 producing apparatus according to the present invention.
Fig. 3 illustrates a partial cross-sectional view of the section of the granulated solid CO2 producing apparatus according to the present invention.
Fig. 4 is an enlarged cross-sectional view of section C of the granulated solid CO2 producing apparatus according to the present invention illustrated in Fig. 3.
Fig. 5 illustrates a general appearance of the case of the granulated solid CO2 producing apparatus according to the present invention.
Fig. 6 illustrates a general appearance of the bushing for the granulated solid CO2 producing apparatus according to the present invention.
Fig. 7 illustrates yet another partial cross-sectional view of the granulated solid CO2 producing apparatus according to the present invention.
Fig. 8 schematically illustrates the exit of solid CO2 shoots (RR) from case 2 at excessive compressing of high-viscosity CO2 according to the present invention.
Fig. 9 schematically illustrates the granule (PL) of solid CO2 with exited solid CO2 shoots (RR) from case 2 at excessive compressing of high-viscosity CO2 according to the present invention.
Fig. 10 schematically illustrates a finished granule of solid CO2 with visible areas of cutting off the shoots
Fig. 11 schematically illustrates section D of the finished granule of solid CO2 with visible areas of cutting off the shoots

### DETAILED DESCRIPTION OF THE INVENTION

The basic process used to produce solid CO2 from liquid CO2 is disclosed and described in prior art sources (see, for example, RU2015127986, US2018282168). In general, the process involves feeding liquid CO2 into a chamber to form solid CO2, where the liquid CO2 is transformed by a sudden reduction of pressure below the carbon dioxide triple point (5.2 absolute atmospheres) into solid CO2, the so-called "snow", and compressed gaseous CO2. The solid CO2 in the form of "snow" is then, if necessary, compressed to produce granulated CO2, wherein the gaseous CO2 formed in the chamber is removed from the chamber. In this application, the terms "granulated CO2" and "CO2 granule" are used interchangeably.

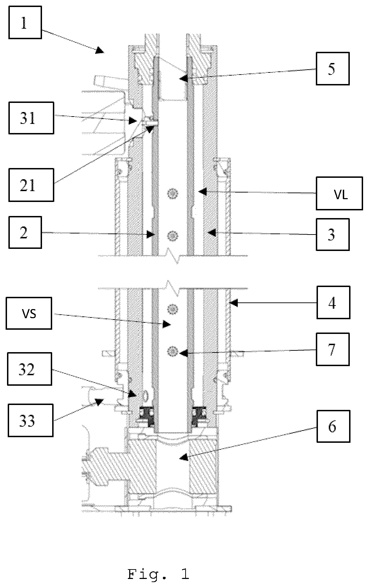

Fig. 1 illustrates a partial cross-sectional general view of the granulated solid CO2 producing apparatus according to the present invention. The apparatus 1 comprises a case (2) for forming solid CO2, a housing (3) for liquid CO2, and a collecting device (4) for collecting gaseous CO2 formed in the case (2), wherein the housing (3) is located around or envelopes the case (2), and wherein the collecting device (4) at least partially envelopes the housing (3). The case (2) has a chamber (VS) for the formation of solid CO2, in which solid CO2 is formed from liquid CO2 entered into the chamber through inlet (21) for liquid CO2 in the case (2). Also, in the chamber (VS) the formed solid CO2 is compressed by exposing solid CO2 to a pressing member (5) causing at least a portion of the formed solid CO2 to convert to a state of an essentially high-viscosity fluid CO2, as will be described in more detail below. The chamber (VS) is defined inside the case (2) and is limited by the inner surface of the wall of the case (2). The case (2) comprises an inlet hole (21) for receiving liquid CO2 to form solid CO2 inside the chamber (VS).

The granulated solid CO2 producing apparatus (1) also comprises a housing (3) defining a chamber (VL) for liquid CO2. The chamber (VL) is suitably defined between the inner surface of the wall of the housing (3) and the outer surface of the wall of the case (2). In this description, the terms "outer" and "inner" should be understood with respect to the direction from the center of the apparatus (1) to the peripheral area, i.e. outward from the apparatus. The chamber (VL) is configured to cyclically and/or continuously receive liquid CO2 through the liquid CO2 inlet hole (32) through continuous circulation of liquid CO2 and/or cyclic supply of liquid CO2 through injection. Liquid CO2 is supplied to the chamber (VL) through the inlet hole (32) by means of the liquid CO2 inlet (33). The inlet (33) may be any suitable accessory, such as a hose, pipe, branch tube, fitting. The housing (3) has an outlet (31) for liquid CO2, whereby liquid CO2 is injected/added into the chamber (VS) of the case (2) through the liquid CO2 inlet (21) of the case (2).

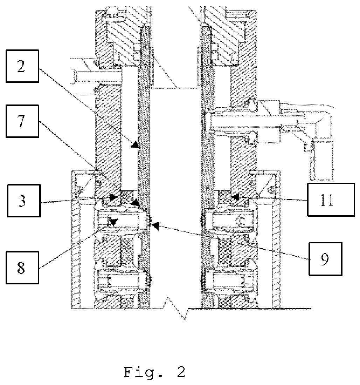

The case (2) comprises a plurality of filter assemblies. In the present description, the filter assembly as a whole refers to a set of elements/means that are, to various extent, involved in the process of filtering solid CO2 particles and related processes. In non-limiting embodiments, the filter assembly may comprise a case hole (7), a filtering element (8) (shown in Fig. 2) including filtering element components, a power block (9) (shown in Fig. 2), including power block components. The filter assemblies comprise case holes (7) configured to provide the inflow of solid CO2, which is in the state of essentially high-viscosity fluid CO2, therein, as will be described in more detail below. Said case holes (7) also discharge the gaseous CO2 formed inside the chamber (VS) to a gaseous CO2 collecting device (4), wherefrom gaseous CO2 can be sent for subsequent use, processing or collection, or can be released into the atmosphere. Case holes (7) are also configured to accommodate a plurality of filtering elements (8) (shown in Fig. 2) that retain solid CO2 particles carried by gaseous CO2 formed inside the chamber (VS). Said holes (7) may also be recesses made in the outer surface of the wall of the case (2) and ending at the end directed towards the interior of the case (2) with a grid element, as will be described below. These holes or recesses (7) may have a shape/section in the form of a circle, a parallelogram, including a rectangle, square, diamond, trapezoid.

The holes or recesses (7) comprise a plurality of power blocks (9) (shown in Fig. 2) made integral with the case (2). The power block (9) is an element made in the body of the case (2) as a reinforcing/strengthening means/element capable of resisting/absorbing the pressure generated inside the chamber (VS) and/or the force applied by solid CO2 and/or CO2 in the state of essentially high-viscosity fluid CO2 in the case where solid CO2 or CO2 in the state of essentially high-viscosity fluid CO2 presses/applies force to the corresponding areas of the holes (7). The role of the power block (9) will be described in more detail below. In a non-limiting embodiment, the power block (9) is made in the form of a circle configured with a grid element in the center, where the circle is recessed in the internal direction into the surface/body of the case (2), in particular, into the outer surface of the wall of the case (2). In more detail, the power block comprises a circle, including/enclosing a grid element/element in the form of a grid, and a ring of solid material surrounding said circle. The power block (9) may also generally be a grid element/element in the form of a grid made in the body of the case (2), in particular, in the inner surface of the wall of the case (2). In a non-limiting embodiment, the power block (9) can be configures in the form of a parallelogram, including a rectangle, a square, a diamond, with a grid element in the center, where the parallelogram is recessed in the internal direction into the surface/body of the case (2), in particular, into the outer surface of the wall of the case (2). The power block can comprise a parallelogram, including a rectangle, a square, a diamond, including/enclosing a grid element/element in the form of a grid, and a solid material surrounding said parallelogram. The power block (9) can also be configured in a form of a trapezoid as above given. The grid element/element in the form of a grid can be shaped as circle/be round-shaped, have the shape of a rectangle, square, diamond, trapezoid.

The apparatus (1) also comprises a pressing member (5) configured to move within the case (2), in particular within the chamber (VS) for compressing solid CO2 to produce granulated CO2 and causing the conversion of at least a portion of the solid CO2 into a state of essentially high-viscosity fluid CO2, as will be described in more detail below. In general, in the non-actuated state, the pressing member is located in a proximal position in the apparatus (1). In the present description, the term "proximal" refers to the part of the apparatus (1) where the pressing member is located in the non-actuated state. The term "distal" refers to the part of the apparatus (1) where the granulated solid CO2 release valve (6) of the apparatus (1) is located. Thus, the valve (6) is located in a distal position, and the pressing member is configured to move in a distal direction towards the valve (6) during compression of solid CO2, and is configured to move in the proximal direction when the pressing member (5) is retracted to its original position corresponding to the non-actuated state. The pressing member can be a plunger, for example plunger (5), or any other element suitable for compression, for example a piston, a rod. The pressing member (5) is configured to be driven by an actuator, not shown, which is, for example, a pneumatic cylinder or a hydraulic cylinder, the operation of which is well known to a person skilled in the art. The actuator is in turn driven by a pressurized fluid medium coming from an actuating device of the pressing member, such as, for example, a compressor, a pump, a hydraulic unit. The fluid medium may be a compressed gas, where the compressed gas may be any suitable gas or mixture of gases such as oxygen, nitrogen, air. With regard to ensuring proper performance, reliability and efficiency, the use of compressed air is preferable. The fluid medium may be a pressurized liquid, where the liquid may be any suitable fluid medium/liquid such as oil, water.

The release valve (6) located in the distal part of the apparatus (1) comprises a compressing surface, which during compressing solid CO2 abuts against under the pressure applied by the pressing member (5), thereby the solid CO2 is compressed to produce granulated CO2. The release valve (6) is rotatable to release granulated CO2 through the granulated solid CO2 outlet. Thus, in the initial state, in particular the compressing state, the compressing surface of the release valve (6) is in contact with solid CO2 and/or the distal part of the granulated solid CO2, in the final position of the release valve (6), the compressing surface rotates, thereby opening the granulated solid CO2 outlet hole to release the granulated solid CO2.

In general, the operating principle of the apparatus and method for producing granulated solid CO2 is as follows.

The liquid CO2 through the liquid CO2 supply inlet (33) and the inlet hole (32) is supplied to the chamber (VL) of the housing (3) by means of a power block providing liquid CO2 circulation/movement, such as a pump, or in the absence thereof through injection. Next, liquid CO2 is supplied through the liquid CO2 inlet hole (21) of the case (2) into the chamber (VS). The chamber (VS) provides conditions for the formation of solid CO2 from liquid CO2, for example, as disclosed in RU2015127986, US2018282168, the contents of which are included in this document in their entirety. Solid CO2 and gaseous CO2 are formed in the chamber (VS). Gaseous CO2 is removed from the chamber (VS) through the holes (7) of the case (2) and a plurality of filtering elements (8) located adjacent to/in contact with the holes (7) into the collecting device (4). Therein, the apparatus is configured such as to provide contact between the outer surface of the wall of the case (2) and the liquid CO2 located in the chamber (VL) for evaporating a portion of the solid CO2 in contact/adjacent to the inner surface of the wall of the case (2). Also, the apparatus is configured such as to provide a direct, i.e. excluding any intermediate walls, elements, etc., contact of the outer surface of the wall of the case (2) with liquid CO2 located in the chamber (VL) to evaporate a portion of the solid CO2 in contact with/adjacent to the inner surface of the wall of the case (2). In particular, liquid CO2 can wash the outer surface of the wall of the case (2). Therein, after the formation of solid CO2, the pressing member (5) moves in the chamber (VS) and compresses the solid CO2 to produce granulated CO2. The release valve (6) is moved to the open position, and the solid granulated CO2 is released from the granulated solid CO2 outlet hole of the release valve. After releasing granulated CO2 from the granulated solid CO2 outlet, the pressing member (5) is returned to the proximal position, and the cycle is repeated from the liquid CO2 supply stroke.

However, the inventors of the present invention have found out that there is a need to improve the above apparatus and method for producing granulated CO2 in terms of producing granulated CO2 of proper density, as well as with proper process performance, reliability and efficiency.

The key quality indicator of a CO2 granule is the granule density [kg/m³]. When using CO2 granules for cleaning purposes (with or without pre-crushing), density is essential as it directly affects the hardness and aerodynamic acceleration in the compressed air stream, which generally affects the effectiveness of dry ice cleaning.

An increase in density is accomplished by exposing solid CO2 particles to external pressure, whereby CO2 vapor is displaced from the volume of the granule between the solid CO2 particles. As CO2 vapor is displaced under pressure, solid CO2 particles combine into a single body. The inventors of the present invention have unexpectedly discovered that an indicator of the maximum density of a solid CO2 granule (or sufficient density for the purpose of use) can be its behavior during the compressing process. When compressed, the granule will tend in the radial direction of the chamber (VS) until all or essentially all CO2 vapors leave its structure. Once all or substantially all of the CO2 vapor or a substantial portion thereof has left the structure of the solid CO2 granule, the granule will become highly dense and only or substantially only the solid phase will be present in the structure of the solid CO2 granule. With a further increase in pressure and compression, the solid CO2 granule will convert into a state of essentially high-viscosity fluid CO2. The expression "a state of essentially high-viscosity fluid CO2" means solid CO2 having high viscosity and the capacity to flow, for example, when exposed to an external force. CO2 in a state of essentially high-viscosity fluid CO2 may essentially be a liquid, in particular a high-viscosity liquid. The beginning and end of compressing in the present invention is characterized, first and foremost, not just by any force acting on dry ice, but primarily by the level of force - a force sufficient for the conversion of dry ice into the state of a high-viscosity liquid.

Thus, in the present invention, at least a portion of the solid CO2 formed in the chamber (VS) of the case (2) is converted into a state of essentially high-viscosity fluid CO2 by continuing to apply force to the solid CO2 from the pressing member (5), thereby improving the density of the finished granule/granulated solid CO2, since upon reaching the state of essentially high-viscosity fluid CO2, the granule acquires a high proper density. Thus, for example, in a non-limiting embodiment, the application of force by the pressing member (5) on the solid CO2 is continued until the point at which the solid CO2 converts into a state of essentially high-viscosity fluid CO2. Said at least a portion of the solid CO2, which is in a state of essentially high-viscosity fluid CO2, is predominantly located/is adjacent to and/or essentially in contact with the inner surface of the wall of the case (2). Said at least a portion of the solid CO2, which is in a state of essentially high-viscosity fluid CO2, can be predominantly located/be adjacent to and/or essentially in direct, i.e. excluding any intermediate walls, elements, etc., contact with the inner surface of the wall of the case (2). In particular, liquid CO2 can wash areas of the outer surface of the wall of the case (2) in contact with a portion of the solid CO2, which is in a state of essentially high-viscosity fluid CO2. The solid CO2 is converted into a state of essentially high-viscosity fluid CO2 by exposing the solid CO2 to a pressing member. In general, the pressure and force applied by the pressing member to the solid CO2 to convert at least a portion of the solid CO2 into a state of essentially high-viscosity fluid CO2 may vary depending on the apparatus and conditions. Therein, the inventors note that in the present invention, the possibility of conversion of solid CO2 into a state of essentially high-viscosity fluid CO2 can be accomplished at a pressure of 150-180 atm, and the resulting granulated CO2 will have a density of 1500-1600 kg/m³. In some embodiments, substantially all of the solid CO2 may be converted to a state of essentially high-viscosity fluid CO2, wherein the solid CO2 may be in contact with/adjacent to the inner wall of the case (2), the pressing member (5), and the release valve (6).

Further, the inventors of the present invention have found out that said portion of solid CO2 (or all solid CO2) in the state of essentially high-viscosity fluid CO2 near the pressing member when the pressing member is moved in the distal direction, tends towards the inner surface of the wall of the case (2), and is pressed against the inner surface of the wall of the case (2), thereby constant thermal contact of high-viscosity fluid CO2 with the inner surface of the wall of the case (2) is maintained during compression, which provides constant evaporation of a portion/layer of high-viscosity fluid CO2 located adjacent to/in contact with the inner surface of the wall of the case (2), due to heat transfer from the liquid CO2 located in the chamber (VL) of the housing (3) to the inner surface of the wall of the case (2). Heat can preferably be transferred directly, i.e. excluding any intermediate walls, elements, etc., from liquid CO2 to the inner surface of the wall of the case (2). The evaporation of precisely said portion/layer of precisely the high-viscous fluid CO2 affects the provision of improved process performance, reliability, efficiency and reduced wear of apparatus elements, since the pressing member (5) encounters fewer obstacles during compression when moving in the chamber (VS), and the friction of the surface of the pressing member (5) on the inner surface of the wall of the case (2) is reduced. Additionally, since pressing member (5) encounters fewer obstacles and has reduced friction against the inner surface of the wall of the case (2), substantially the entire force of the pressing member (5) will be transmitted in the distal direction specifically for compressing solid CO2, thus achieving the required high-density compaction of solid CO2.

The inventors of the present invention have also found out that the compressing of solid CO2, at least a portion of which has converted into a state of essentially high-viscosity fluid CO2, should be stopped rather than continued until the granulated CO2 exits the apparatus, since the liquid CO2 located in the chamber (VL) may be supercooled and frozen, and filtering elements in the interval from the pressing member (5) to the release valve (6) may be severely clogged, which will adversely affect the process performance, reliability and efficiency. Such adverse effects can occur with choosing too high a compressing pressure. In certain embodiments, the compressing according to the present invention is stopped at the point where substantially all or all of the solid CO2 has converted to a state of essentially high-viscosity fluid CO2. When stopping/terminating the compression, the pressing member (5) is fixed in the last/distal compressing position.Fixing the pressing member (5) can be either a complete stoppage/deactivation of the pressing member (5), or stoppage of precisely the compression of solid CO2 by reducing the force applied to the solid CO2 by the pressing member (5) by adjusting the pressure above and below the pressing member (5). In the latter case, the process can be carried out such that a slight excess pressure can remain above the pressing member (5), at which specifically the compression will not take place, but which can provide a gentle push-out/exit of the granule when the release valve (6) is opened with no need to re-apply pressure to the pressing member (5). In non-limiting embodiments of the present invention, fixation of the pressing member (5) with the subsequent release of the CO2 granule can be implemented as follows and under the following conditions:
a. pressure above the pressing member (5) is 4 atm and pressure under the pressing member (5) is 3.7 atm, a pressure difference of 0.3 atm is provided in the direction of the CO2 granule, when the release valve (6) is opened, said pressure difference gently pushes the CO2 granule out of the case 2;
b. pressure above the pressing member (5) is 0.3 atm and pressure under the pressing member (5) is 0 atm, a pressure difference of 0.3 atm is provided in the direction of the CO2 granule, when the release valve (6) is opened, said pressure difference gently pushes the CO2 granule out of the case 2;
c. complete stoppage of the pressing member (5), on both sides of the pressing member (5) the pressure is 0 atm, upon opening of the release valve (6) a small portion of fluid medium is supplied to create a small force on the pressing member (5), which gently pushes the CO2 granule out of the case (2);
d. complete stoppage of the pressing member (5), on both sides of the pressing member (5) the pressure is 4 atm, upon opening of the release valve (6), the pressure under the pressing member (5) is released, thereby the pressing member (5) applies a small force to the CO2 granule to provide a gentle push of the CO2 granule out of the case (2).

It is also possible to push CO2 granules out of the case (2) by briefly injecting liquid CO2 into the chamber (VS) through inlet (21). In this case, after compressing stoppage, the pressing member (5) is retracted to the proximal position, after which liquid CO2 is injected into the chamber (VS) to provide pushing of CO2 granules out of the case (2).

Thus, the method and operation of the apparatus according to the present invention is as follows.

As already discussed above, solid CO2 is formed in the chamber (VS) of the case (2). After the formation of the required amount of solid CO2, the pressing member (5) is activated to compress solid CO2 in the chamber (VS) of the case (2). During compression, the distal part of the solid CO2 abuts against the compressing surface of the release valve (6). The compression is carried out in the chamber (VS) of the case (2) to provide the conversion caused by the impact on solid CO2 of the pressing member (5), of at least a portion of the solid CO2 into a state of essentially high-viscosity fluid CO2, preferably this portion of the solid CO2, which has undergone a conversion into the state of essentially high-viscosity fluid CO2 is located adjacent to and/or in contact with the inner surface of the wall of the case (2). The pressing is then stopped, preferably by fixing the pressing member, whereby the CO2 in a state of essentially high-viscosity fluid CO2 converts back to a solid state to produce granulated solid CO2. In general, compression can be carried out up to the point where substantially all of the solid CO2 is converted to a state of essentially high-viscosity fluid CO2. Therein, after stopping the compressing and fixing the pressing member (5), a small force is applied to the pressing member (5) capable of providing the release of granulated CO2 from the apparatus, wherein the release valve (6) is rotated to the end position to release granulated CO2 from the apparatus. Therein, as discussed above, the operation of stopping the compressing and fixing the pressing member (5) can also occur with the presence of a slight excess pressure in the chamber (VS).

In the process of receiving solid CO2 in the chamber (VS) of the case (2), liquid CO2 is fed cyclically or continuously (circulation) into the chamber (VL) of the housing by means of a power block for circulating/moving liquid CO2 or, in its absence thereof, through injection. Cyclic supply of liquid CO2 comprises multiple cycles of supply of liquid CO2, where one cycle includes a single passing of liquid CO2 from the bottom of the chamber (VL), i.e. from the liquid CO2 inlet hole (32) to the point of entry into the chamber (VS), i.e. to the liquid CO2 inlet (21) of the case (2) and the liquid CO2 outlet (31) of the housing (3). Cyclic supply of liquid CO2 can be carried out by means of a liquid CO2 injection valve from the housing (3) into the case (2) to form solid CO2 from liquid CO2 in the case (2). Supply of liquid CO2, predominantly in the case of continuous supply can be accomplished by means of a power block for circulating/moving liquid CO2, such as a pump. The pump can be any pump suitable for moving liquid CO2, however, from as regards the performance, reliability and efficiency of the process, a continuous volume-displacement gear or sliding (rotary) vane-type pump, in particular, induction motor powered, or a plunger/piston pump of a discrete (cyclic) type is preferable to displace volume. It is also possible to supply liquid CO2 without a power block for moving the liquid CO2 by other means known in the art, for example, by means of a valve(s)Therein, the supply of liquid CO2 is preferably controlled such that the liquid CO2 or its level in the chamber (VL) is in contact with areas of the case wall adjacent to which highly viscous fluid CO2 is formed. Liquid CO2 or its level in the chamber (VL) may be in direct contact with areas of the case wall adjacent to which highly viscous fluid CO2 is formed.

It is important to note that the case (2) can be made of a monolithic material such as for example AISI 304 stainless steel, rather than from a combined assembly, such as a cylindrical case and a wound spiral tube over the surface of the case, which does not guarantee high-quality heat transfer or complicates creating thermal contact using additional relatively complex manufacturing processes such as soldering or fusion welding. Even with proper soldering/welding techniques, thermal contact will have a lower heat transfer coefficient due to the presence of solder or increased wall thickness between the high-viscosity solid CO2 and liquid CO2. Washing the monolithic case with liquid CO2 provides a relatively more similar and predictable heat transfer process in several manufactured identical apparatuses according to the present invention. Also, washing has an additional advantage in case of excessive compressing: when the transfer of cold from high-viscosity CO2 to liquid CO2 can cause the effect of crystallization of liquid CO2 (supercooling), whereby areas with layers of frozen liquid CO2 can appear on the surface of the case. This reduces the risk of clogging the channel through which liquid CO2 flows between the housing and the case compared to a wound tube, since the flow area of the tube will always be less than the cross-sectional area of the space between the housing and the case.The apparatus will continue to operate and will be able to quickly restore the nominal operating mode by washing frozen liquid CO2 with liquid CO2, when the flow of liquid CO2 in the tube with frozen liquid CO2 simply stops. For this purpose, it is preferable to use a power block for moving the liquid CO2. Said supply/circulation/movement of liquid CO2 in the chamber (VL) provides heat transfer from the liquid CO2 in the chamber (VL) of the housing (3) through the wall of the case (2) to CO2 in a state of essentially high-viscosity fluid CO2 to provide the evaporation of the latter adjacent to the inner surface of the wall of the case (2). Also, when using a power block to provide the movement of liquid CO2, it is possible to circulate liquid CO2 in the chamber (VL), so that at any time liquid CO2 washes the entire surface of the outer surface of the wall of the case (2), which can further improve heat transfer.

Fig. 2 shows holes or recesses (7) of the case into which a plurality of filtering elements (8) are set/inserted (located/placed) configured to provide the passage of gaseous CO2 discharged from the chamber (VS) of the case (2) and the retention of particles of solid CO2. The filtering elements (8) generally comprise a filtering element body configured to be secured by thread, insert or fit tight in the wall of the case (2) and in the wall of the housing (3), and a filtering medium selected from a mesh, sintered balls and compressed wire and located in filtering element body. The filtering elements comprise a body section located in the liquid CO2 chamber (VL) of the housing (3) filled with liquid CO2. Therein, said section of the filtering element body comprises at least one surface in contact with the liquid CO2 chamber (VL) of the housing (3), or all surfaces/entire surface of the section of the filtering element body is in contact with liquid CO2 located in the liquid CO2 chamber (VL) of the housing (3). Said configuration of the location of the filtering elements enables washing of the surface of the filtering elements, in particular, the surface of the body of the filtering elements with liquid CO2. Even though the present application as well as the figures presents the embodiments comprising holes or recesses (7), the case (2) can also comprise, instead of holes or recesses (7), substantially flat areas, in particular milled, to which filtering elements (8) can be suitably attached or positioned.

The inventors of the present invention have found out that the presence of filtering elements (8) can provide rapid and proper production of CO2 in a state of essentially high-viscosity fluid CO2, since the filtering elements (8) provide rapid removal of CO2 vapors displaced from solid CO2. Preferably, to effectively remove CO2 vapors displaced from solid CO2, the filtering elements are positioned along/longwise, in particular, along the entire length of the chamber (VS) of the case (2).

When CO2 moves in a state of essentially high-viscosity fluid CO2 towards the inner surface of the wall of the case (2) at the locations of the filtering elements and, accordingly, the holes (7) of the case (2), a problem may occur in that said filtering elements (8) may be damaged and the filtering medium can be knocked outward by the force applied by CO2 in a state of essentially high-viscosity fluid CO2. Therefore, for further improvement in terms of process performance and reliability, power blocks (9) can be provided in the holes (7) as above given. These power blocks (9) prevent damage and knockout of the filtering elements in the outer direction, which can further increase the granulated CO2 production process reliability. The power blocks (9) are located adjacent to or in contact with the end of the filtering element directed inward to the chamber (VS) of the case (2), whereby providing the protection of the filtering elements (8) while securing the unhindered passage of gaseous CO2 from the chamber (VS) of the case (2). During operation of the apparatus, CO2 in a state of essentially high-viscosity fluid CO2 can flow into the holes of the power blocks (9) and into the filtering elements (8), in particular into the body of the filtering elements (8), as well as into the filtering medium in the form of sintered balls, wire, etc. The end of the filtering element (8) directed towards the chamber (VS) of the case (2) or inward/to the center of the case (2) repeats the geometry of the inner surface of the wall of the case (2)/chamber (VS) of the case (2).

The bodies of the filtering elements (8) may also have additionally built-in reinforcing elements (not shown) configured to prevent damage to the filtering medium of the filtering elements (8). Said reinforcing elements are located adjacent to and/or in contact with the filtering medium. The reinforcing element may be located in the body of the filtering element (8) behind or at the rear of the filtering medium in the outer direction, by way of illustration and not limitation, the reinforcing element may be a cross member, the ends of which are attached to the body of the filtering element (8) to the inner surface of the body, and/or the surface of which is attached to the filtering medium. The reinforcing element may be rods connected in a cross-shaped configuration, the ends of which are attached to the body of the filtering element (8) to the inner surface of the body, and/or the surface of which is attached to the filtering medium. Preferably, the reinforcing element may be stiffening ribs built inside of the body of the filtering elements. The use of reinforcing elements can further provide reliability of the granulated CO2 production process.

Additionally, the reinforcing element of the filtering element may be a mesh, for example a wire mesh.

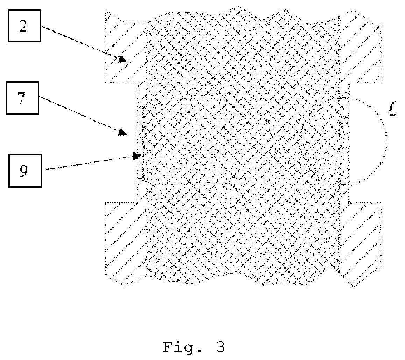

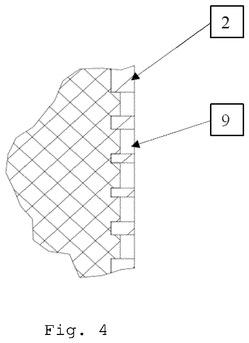

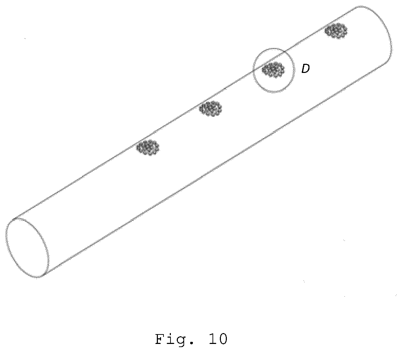

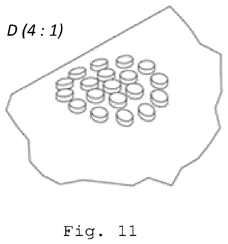

CO2 in a state of essentially high-viscosity fluid CO2 during compression tends/moves in the radial direction towards the inner surface of the wall of the case (2). In the areas of the case (2) where the holes (7) and filtering elements (8) are located, high-viscosity fluid CO2 can flow into the holes (7) through the power blocks (9) in particular, the grid holes of the power blocks (9) or into the filtering elements (8), in particular, the filtering medium with the formation of protrusion-shaped shoots, as shown in Figs. 3 and 4, where the shaded area illustrates solid CO2 after at least a portion of it has passed into an essentially high-viscosity fluid state. In one embodiment, CO2 in a state of essentially high-viscosity fluid CO2 may also flow into the filtering elements (8) as above given. In general, the inflow of high-viscosity fluid CO2 into the holes (7) through the power blocks (9)/filtering elements (8) means any intersection of the high-viscosity fluid CO2 with the theoretical cylindrical boundary of the chamber (VS) during compression, which may prevent the free exit of solid CO2 from the chamber, for example, under its own weight. When moving the pressing member (5) in the distal direction, these protrusion-shaped shoots will be cut off by the pressing member (5), while the cut off shoots will evaporate converting into gaseous CO2, due to the heat flow from the liquid CO2 located in the chamber (VL) through the filtering elements (8). Therein, the finished CO2 granule will have visible cut off areas of said shoots as shown in Figs. 10 and 11. These visible cut off areas may include protrusions, recesses in the surface of the CO2 granule, bumps, roughness on the surface of the CO2 granule, and combinations thereof. Figs. 10 and 11 show the visible cut off areas of protrusion-shaped shoots, however, as above given, the visible cut off areas of said shoots can be shaped differently. In general, a person skilled in the art upon visual inspection of a CO2 granule will readily detect visible areas of cutting off said shoots and will recognize that certain areas represent visible cut off areas of said shoots. In some embodiments, by moving the high-viscosity fluid CO2 in a radial direction toward the inner surface of the wall of the case (2), visible areas of the above shoots may be formed, where these areas may have the same shape as the visible areas of cutting off said shoots. The finished solid CO2 granule may also have said visible areas of shoots, and said visible areas of shoots can also be easily detected by a person skilled in the art as above given. The inventors of the present invention have found out that these visible cut off areas and/or visible areas of shoots on a CO2 granule are advantageous in terms of providing control over the quality of the resulting granulated solid CO2 and the production process thereof, since the presence of visible cut off areas and/or areas of shoots on a CO2 granule is evidence that the process took place in the pre-set manner with no significant deviations and the solid CO2 granule is of proper density. The cutting step is carried out preferably after fixing the position of the pressing member (5) when applying force to the granulated CO2 to provide exit of the granulated CO2 from the case 2.

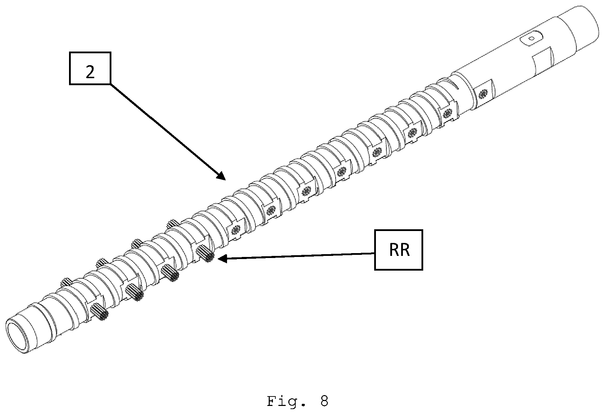

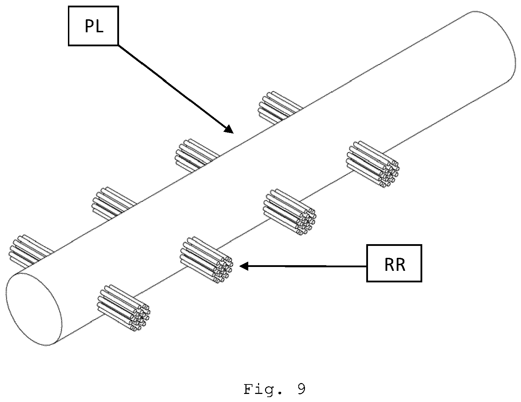

The inventors of the present invention have found out that due to either higher plunger pressing pressure, too long plunger pressing time, too high heating of the liquid CO2 chamber, or too large holes in the case (2)/filter assemblies, or a combination of the above said reasons, a situation of excessive compression of high-viscosity CO2 granule (PL) may occur. An example of excessive compression of solid CO2 (PL) is shown in Fig. 8 and Fig. 9. With excessive compression of high-viscosity solid CO2 (PL) with no filters installed on top of the case (2) grid, the shoots flow out through the holes and immediately convert from the high-viscosity state into solid CO2 and stretch into elongated elements (RR). This effect is evidence of the application of the present invention on the level with visible sites of cut off shoots. If the filtering elements are removed and only open grids or open holes in the case (2) are left, the high-viscosity CO2 (PL) may be extruded through the above for the reasons above given.

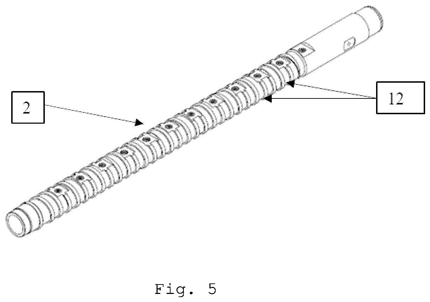

Fig. 5 shows one non-limiting embodiment of the case (2). The case (2) may be configured with a groove (12) running in a spiral along the outer surface of the wall of the case (2) for liquid CO2 to flow therethrough. This groove thus forms a helical surface on the surface of the outer surface of the wall of the case (2). Also, the groove can be formed by mating the case and the bushing, the latter will be described below. For example, the groove may also be configured with a boring in the inside of the bushing. The inventors of the present invention have found out that providing a groove running in a spiral along the outer surface of the case wall and configured to provide liquid CO2 to flow therethrough can further enhance the heat transfer process from the liquid CO2 to the CO2 in a state of essentially high-viscosity fluid CO2 in the chamber (VS) of the case (2) through the wall of the case (2), whereby the evaporation of CO2 in contact with/adjacent to the inner surface of the wall of the case (2) can be improved, which in turn can further improve the performance, reliability and overall efficiency of the process, as well as reduce wear on the elements of the apparatus. Additionally, the provision of said groove may reduce the required capacity of the power block for moving the liquid CO2, such as a pump, in terms of volumetric displacement per unit time. This can improve the energy efficiency of the process, which in turn will be of added benefit of overall process efficiency.

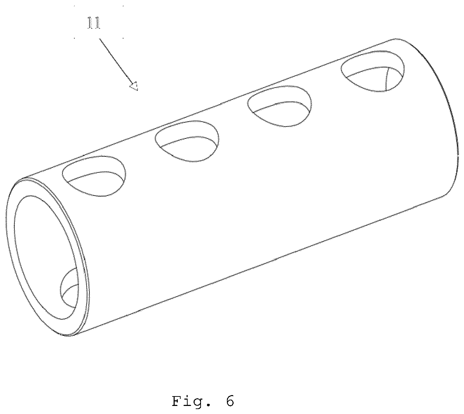

Fig. 6 shows a bushing 11 configured to be positioned on top of the outer surface of the wall of the case (2). The location of the bushing in the apparatus (1) is illustrated in Fig. 2. The apparatus (1) may accommodate at least one or a plurality of bushings (11). Thus, the bushing (11) is engaged/placed over the outer surface of the wall of the case (2) and, accordingly, between the case (2) and the housing (3) in the chamber (VL). The bushing (11) is configured to limit the volume/section of the chamber (VL) to reduce the flow rate/volume of liquid CO2 in the chamber (VL), whereby liquid CO2 is in contact with the outer surface of the wall of the case (2) for a longer period of time, wherefore the efficiency of heat flow from liquid CO2 can further increase with further improvements in the process performance, reliability, and efficiency, and reduced wear on apparatus components. The bushing has holes, the location of which corresponds to the location of the holes (7) and the filtering elements (8), in other words, the holes in the bushing can be aligned with the holes (7) and the filtering elements (8), such that the holes of the bushing (11) are configured to receive the filtering elements (8), in particular the body of the filtering elements (8). Thus, the bushing is located on top of the case (2)/envelopes the case (2), with the filtering elements (8) located in the holes of the bushing. The bushing (11) can be located on top of the case (2), which has a groove (12) running in a spiral along the outer surface of the case (2), or can be located on top of the case (2), which does not have said groove (12). The bushing (11) is also configured to provide thermal insulation for the flow of liquid CO2 flowing along the case (2) or along the groove (12) of the case (2), relative to the inner surface of the wall of the housing (3), whereby it is possible to further improve the evaporation of solid CO2 at the inner surface of the wall of the case (2), since liquid CO2 does not give up heat to the inner surface of the wall of the housing (3) .

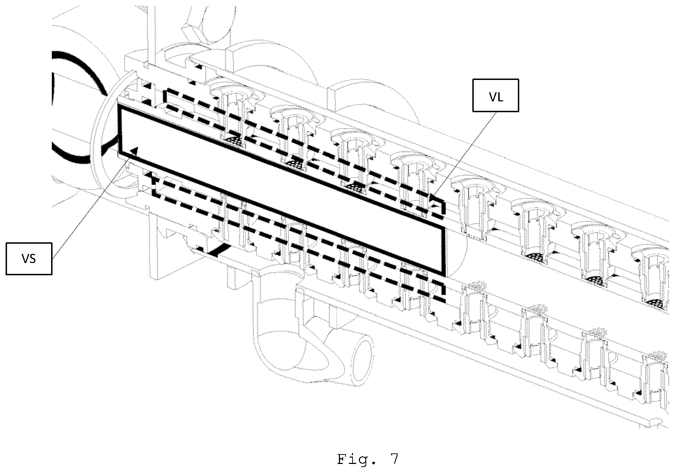

Additionally, the inventors of the present inventors have found out that the ratio of the volume of the liquid CO2 chamber (VL) of the housing (3) filled with liquid CO2 when compressing solid CO2 to the volume of the chamber (VS) can also further improve the process performance, reliability, and efficiency, and reduce the wear of components of the granulated CO2 producing apparatus. Thus, it is important that during compression the volume occupied by solid CO2/CO2 in a state of essentially high-viscosity fluid CO2/granulated CO2 is related to the volume occupied by the volume of liquid CO2 located in the chamber (VL), since it is necessary to wash the part of the case (2) and, accordingly, the chamber (VS) in which CO2 is located during its compression. Fig. 7 schematically shows a cross-sectional view of part of the apparatus (1), where the dotted line indicates the part of the chamber (VL) filled with liquid CO2 during compression, and the solid line indicates the volume of the chamber (VS) occupied by solid CO2.

The present invention also relates to a system for producing granulated CO2, comprising: at least one granulated CO2 production apparatus 1, and a pressing member actuator communicating with the granulated CO2 production apparatus (1) and configured to supply a pressurized fluid medium to the pressing member. In the case where the system comprises more than one granulated CO2 production apparatus (1), the apparatuses (1) can be parallel- or series-connected to the pressing member power block. At least one apparatus (1) communicates with the pressing member actuator through an actuator, which in turn is operatively connected to the pressing member (5). The distal and proximal movement of the pressing member is provided by the supply of a fluid medium, for example, a compressed gas, such as compressed air, or liquids such as oil/water, to an actuator, such as, for example, a pneumatic cylinder or a hydraulic cylinder, by means of any fluid medium communication accessories known in the prior art, for example, hoses, pipes, branch tubes. The pressing member actuator can be any device configured to supply a fluid medium, for example, a compressed gas or a pressurized liquid to the granulated CO2 production apparatus. Preferably, in view of performance, the pressing member actuator is a compressor.

The granulated CO2 production apparatus and the pressing member actuator are spatially separated. Such spatial separation prevents heat from flowing from the pressing member power block into the interior of the granulated CO2 production apparatus, in particular into the solid CO2 forming chamber (VS). The influx of heat can adversely affect the efficiency of the process, since untoward heating of liquid CO2 and solid CO2 will occur, therefore, the spatial separation of the granulated CO2 production apparatus and the pressing member actuator can further improve the efficiency of the process.

It will be obvious to one of ordinary skill in the art that the embodiments covered by the present description are not limited to the specific illustrative embodiments described above. That said, albeit illustrative embodiments have been shown and described, a wide range of modifications, variations, combinations and substitutions are contemplated in the foregoing description. It should be understood that such variations can be made without departing from the scope of the present invention. Accordingly, it is appropriate to construe the appended claims broadly and in a manner consistent with the present description.

## Claims

1. A method for producing granulated CO2, comprising:
a) formation of solid CO2 inside the case of the granulated CO2 production apparatus,
b) compressing solid CO2 inside the case of the apparatus to provide a conversion of at least a portion of the formed solid CO2 to a state of essentially high-viscosity liquid CO2, and the said portion of the solid CO2, which has undergone a conversion to a state of essentially high-viscosity liquid CO2 is located adjacent to the inner surface of the case wall,
c) stopping the compressing to provide a conversion of CO2, which is in the state of essentially high-viscosity liquid CO2, into solid CO2 to produce granulated CO2.

2. A method according to claim 1, wherein granulated CO2 production apparatus comprises a housing defining a liquid CO2 chamber configured to receive liquid CO2, wherein the liquid CO2 chamber envelopes the case, wherein liquid CO2 is cyclically and/or continuously fed to the liquid CO2 chamber, wherein the supply of liquid CO2 to the liquid CO2 chamber is controlled such that the liquid CO2 is in contact with areas of the housing wall adjacent to which the high-viscosity liquid CO2 is formed.

3. A method according to claim 2, further comprising step d) applying force to the granulated CO2 to ensure that the granulated CO2 exits the apparatus case, wherein the case has a chamber for forming solid CO2, wherein steps a)-c) are carried out in the sold CO2 chamber.

4. A method according to claim 1, wherein the case has an outer wall surface, wherein a groove is provided on the outer wall surface, extending in a spiral along the outer wall surface and configured to allow liquid CO2 to flow therethrough.

5. A method according to claim 1, wherein the case contains a plurality of filter assemblies with a plurality of holes in the case, wherein it provides inflow of CO2, which is in the state of essentially high-viscosity liquid CO2 into said plurality of holes to form protrusion-shaped shoots,
wherein the method further comprises step d) applying force to the granulated CO2 to ensure the release of the granulated CO2 from the apparatus case, wherein in step d) provides cutting of the protrusion-shaped shoots, wherein the granulated CO2 has visible shoot cutting areas on its surface.

6. A method according to claim 5, wherein the filter assemblies comprise a plurality of filtering elements, wherein a plurality of holes in the case are configured to accommodate a plurality of filtering elements, wherein each filtering element has a filtering element housing and a reinforcing element in-built in the filtering element housing.

7. A method according to claim 1, wherein in step b) all solid CO2 located in the case of the granulated CO2 production apparatus is converted into a state of essentially high-viscosity liquid CO2, and/or
the granulated CO2 production apparatus comprises a pressing member, wherein in step b) the compression is carried out by moving the pressing member in the case of the granulated CO2 production apparatus, and wherein step c) comprises stopping the movement of the pressing member in the case of the granulated CO2 production apparatus.

8. Granulated CO2 produced using the method according to any one of claims 1 to 7, including visible areas of cutting off shoots and/or visible areas of appearance of shoots on its surface.

9. An apparatus for producing granulated carbon dioxide, comprising:
- a case having a chamber for solid CO2, configured to form solid CO2 therein,
- a pressing member configured to compress solid CO2 in the chamber for solid CO2 to provide the conversion of at least a portion of the solid CO2 into the state of essentially high-viscosity liquid CO2, wherein said portion of the solid CO2, which has undergone a conversion into the state of essentially high-viscosity liquid CO2, is located adjacent the inner surface of the case wall,
wherein the apparatus is configured to provide contact of liquid CO2 with areas of the case wall adjacent to which highly viscous fluid CO2 is formed.

10. The apparatus according to claim 9 further comprising:
- a housing defining a liquid CO2 chamber configured to cyclically and/or continuously receive liquid CO2, wherein the liquid CO2 chamber envelopes the case, and
- a power block to provide the movement of liquid CO2 in the liquid CO2 chamber of the case configured to cyclically and/or continuously supply liquid CO2 into the liquid CO2 chamber of the case,
wherein the power block for providing movement of liquid CO2 is configured to supply liquid CO2 such that the liquid CO2 is in contact with areas of the case wall adjacent to which high-viscosity liquid CO2 is formed, wherein the case wall areas are areas of the outer surface of the case wall,
wherein the power block for providing movement of liquid CO2 is configured to provide continuous and/or cyclic supply of liquid CO2, is a pump, or
the power block for providing movement of liquid CO2 configured to provide cyclic supply of liquid CO2, is a valve for injection of liquid CO2 into the solid CO2 chamber of the case.

11. The apparatus according to claim 9, wherein the case comprises a plurality of filter assemblies with a plurality of holes in the case configured to provide the inflow of CO2, which is in the state of essentially high-viscosity liquid CO2, into said plurality of holes to form protrusion-shaped shoots, wherein the pressing member is configured to cut off the protrusion-shaped shoots providing visible areas of cutting off shoots on the surface of granulated CO2.

12. The apparatus according to claim 11, wherein each filter assembly comprises a grid element with holes configured integral with the case of the granulated CO2 production apparatus, and wherein the grid element is configured to absorb the force applied by the CO2, which is in a state of essentially high-viscosity liquid CO2, in the direction from the center of the case of the granulated CO2 production apparatus to the inner surface of the wall of the case of the granulated CO2 production apparatus.

13. The apparatus according to claim 11, wherein the filter assembly comprises a filtering element, wherein the end of the filtering element directed to the center of the case of the granulated CO2 production apparatus is configured to repeat the geometry of the inner surface of the solid CO2 chamber wall to provide unhindered movement of the pressing member in the solid CO2 chamber.

14. The apparatus according to claim 12 or claim 13, wherein the grid element with holes and/or the said end of the filtering element is configured to provide the inflow of solid CO2, which is in the state of essentially high-viscosity liquid CO2, therein, wherein the case of at least one filtering element is in contact with liquid CO2.

15. The apparatus according to claim 9, wherein the mating of the case and the bushing provides the formation of a groove running in a spiral along the outer surface of the case wall and configured to flow liquid CO2 therethrough, wherein the power block to provide the movement of liquid CO2 is configured to supply liquid CO2 such that liquid CO2 flows along the said groove.
